# EUROPEAN PATENT APPLICATION

(11) **EP 3 086 203 A1**
(43) Date of publication of application: **26.10.2016**
(21) Application number: 16165914.9
(22) Date of filing: 19.04.2016
(51) Int. Cl.: G06F 1/26

(54) **STORAGE DEVICE STACKING SYSTEM**

(30) Priority: 20.04.2015 TW 104112549
(71) Applicant: Walton Advanced Engineering Inc., Kaohsiung City 80681 (TW)
(72) Inventor: YU, Hong-Chi, Kaohsiung City 80681 (TW); CHANG, Mao-Ting, Kaohsiung City 80681 (TW)
(74) Representative: Viering, Jentschura & Partner mbB Patent- und Rechtsanwälte

(57) **Abstract**

A storage device stacking system comprises a main storage device and an auxiliary storage device: the main storage device depends on a power input interface and a data link interface to access a power supply and an external network and allows internal electronic components to be electrically activated; the auxiliary storage device is activated when a power output interface and a power reception interface on the auxiliary storage device are electrically connected to each other; data can be transmitted from the main storage device to the activated auxiliary storage module through an auxiliary data bridging interface when a main data bridging interface and the auxiliary data bridging interface on the auxiliary storage device are electrically connected to each other.

## Description

### BACKGROUND OF THE INVENTION

### 1) Field of the Invention

The present disclosure relates to a storage device assembly system, particularly a system with power management and data transmission integrated for power connection and data communication between a main storage device and an expanded auxiliary storage device and the main storage device managing power and data totally.

### 2) Description of the Prior Art

In the digital era, all kinds of information are digitized and stored through data storage media currently; moreover, the Internet which is popular with the masses drives the single disk array, the initial solution for storage, to another solution based on remote network storage.

There have been several patents for storage systems as shown below.

TW 102104843 disclosed a cloud web disk array supply system which comprises a plurality of hosts consisting of fair-price hard disks for dynamically supplying web disk array services as required. The plurality of hosts comprises a control host and a plurality of storage hosts. The plurality of storage hosts are opened and connected to the control host which executes a computing procedure for the disk array so that both the control host and the plurality of storage hosts constitute a disk array cluster. A user who links the control host via a network will access the disk array cluster. The disk array cluster in the cloud web disk array supply system consists of a plurality of hosts which are connected to one another via a network, providing users with cloud web disk array services by adding and/or deleting a host and selecting positions and roles of hosts, and satisfying different demands of storage spaces, storage speeds and data security.

TW 102108564 disclosed a storage space expansion system in which some cloud storage space supporting network devices' local storage space based on support priority is deployed. The storage space expansion system which receives a network device's new information to be stored will check surplus capacity in local storage space: (1) surplus capacity equal to or greater than default capacity: new data is stored in local storage space by the storage space expansion system; (2) surplus capacity less than default capacity: data originally saved in local storage space is duplicated by the storage space expansion system and further stored in corresponding cloud storage space based on support priority; then the data in local storage space is deleted until surplus capacity in local storage space is equal to or greater than default capacity.

TW I333620 disclosed a portable network access point device by which a mapped network drive is accessed via a FireWire or a USB port. The portable network access point device features all functions for accessing a network and shared network drives. The portable network access point device has one end to which Ethernet is connected and the other end with a USB or FireWire port. The portable network access point device which has been connected to a network tries linking all planned shared network drives. A driver is loaded by a computer and listed disk drives are mapped when the portable network access point device is connected to the computer through a USB /FireWire port. The computer needs not to load a whole network stack prior to accessing the disk drives. With a single configuration completed, a technician may access shared disk drives from any computer without reconfiguring the network or disk drive mapping. A storage device is shown in a computer system which is connected to a portable network access point device through a USB/FireWire port. As shown in a network, the portable network access point device, however, is regarded as a network adapter which is connected to the network. The patent disclosed a computing system with a portable network access point device by which a mapped network drive is accessed via a FireWire or a USB port. The portable network access point device feature all functions for accessing a network and shared network drives. The portable network access point device has one end to which Ethernet is connected and the other end with a USB or FireWire port. The portable network access point device which has been connected to a network tries linking all planned shared network drives. A driver is loaded by a computer and listed disk drives are mapped when the portable network access point device is connected to the computer through a USB /FireWire port. The computer needs not to load a whole network stack prior to accessing the disk drives. With a single configuration completed, a technician may access shared disk drives from any computer without reconfiguring the network or disk drive mapping. A storage device is shown in a computer system which is connected to a portable network access point device through a USB/FireWire port. As shown in a network, the portable network access point device, however, is regarded as a network adapter which is connected to the network.

However, most solutions mentioned above are intended for enterprise environment rather than private environment via a simple and quick manner; moreover, the costs and know-how are required in most solutions and the options for diversified functions in these solutions are limited.

Therefore, a storage device stacking system presented herein is intended to solve these problems.

### SUMMARY OF THE INVENTION

In virtue of above problems, the present disclosure describes a storage device stacking system which comprises a main storage device for power connection, data transmission and centralized management and an auxiliary storage device for expanded storage space beyond the main storage device.

The present disclosure describes a storage device stacking system which increases storage space simply and effectively by means of unified management of power/data.

The present disclosure describes a storage device stacking system with fewer limitations in expanded capacity of storage devices.

The present disclosure describes a storage device stacking system which depends on an internal transformer unit to transform external AC to DC for fewer costs of purchasing a main storage device initially.

The present disclosure describes a storage device stacking system which depends on various data bridging mechanisms to increase storage space and additional functions.

The present disclosure describes a storage device stacking system which contributes to availability of existing equipment and decreases probability of decommissioning existing equipment.

For these purposes, a storage device stacking system depends on technical measures as follows. In the present disclosure, a storage device stacking system is a system with power management and data transmission integrated and comprises a main storage device and an auxiliary storage device: the main storage device comprises at least a power input interface, at least a power output interface, a power management module, at least a data link interface, at least a main data bridging interface, a data management module and a main storage module, all of which are carried on a first board and electrically connected to one another; the auxiliary storage device comprises at least a power reception interface, at least an auxiliary data bridging interface and an auxiliary storage module, all of which are carried on a second board and electrically connected to one another; features: the power management module, the data management module and the main storage module are electrically activated when the power input interface on the main storage device is electrically conducted and the data link interface is connected to an external network; the auxiliary storage device is electrically activated when the power output interface is electrically connected to the power reception interface on the auxiliary storage device; an auxiliary storage module and the main storage device, both of which are electrically activated, make data transmission through the auxiliary data bridging interface when the main data bridging interface and the auxiliary data bridging interface on the auxiliary storage device are electrically connected to each other.

Moreover, a storage device stacking system depends on following technical measures to realize purposes and techniques.

In the above storage device stacking system, the power management module comprises a transformer unit.

In the above storage device stacking system, the auxiliary storage device comprise an auxiliary power management module, which is carried on and electrically connected to the second board, and the auxiliary power management module comprises an auxiliary transformer unit.

In the above storage device stacking system, the auxiliary storage device comprises at least an expanded data link interface and at least an expanded power output interface, both of which are carried on the second board and electrically connected to each other.

In the above storage device stacking system, the auxiliary storage device comprises at least an auxiliary data link interface which is carried on and electrically connected to the second board.

In the above storage device stacking system, the auxiliary storage device comprises a data processing module and an image output module, both of which are carried on the second board and electrically connected to each other.

In the above storage device stacking system, the auxiliary storage device comprises an auxiliary data management module.

In contrast to conventional techniques, a storage device stacking system has effects as follows: (1) storage capacity increased easily and quickly; (2) fewer limitations in expansion and costs because of transformer units during initial setup of a storage device stacking system; (3) data bridging promoting probable functions of other additional devices.

### BRIEF DESCRIPTIONS OF THE DRAWINGS

FIG. 1 is the first schematic view of a storage device stacking system in a preferred embodiment;
FIG. 2 is the second schematic view of a storage device stacking system in a preferred embodiment;
FIG. 3 is the third schematic view of a storage device stacking system in a preferred embodiment;
FIG. 4 is the fourth schematic view of a storage device stacking system in a preferred embodiment;
FIG. 5 is the fifth schematic view of a storage device stacking system in a preferred embodiment.

### DETAILED DESCRIPTIONS OF THE PREFERRED EMBODIMENTS

A storage device stacking system will be further illustrated in following embodiments for clear understanding of purposes, characteristics and effects

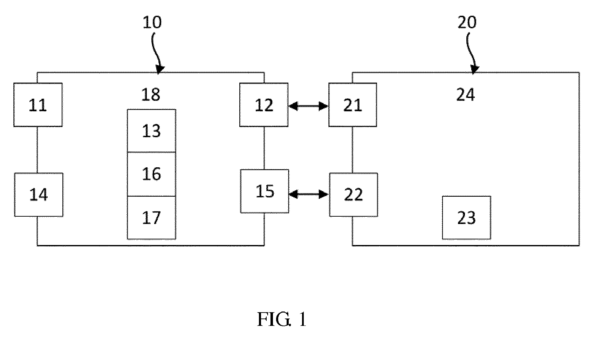

FIG. 1 through FIG. 5 illustrate a storage device stacking system in main embodiments. Referring to FIG. 1 which illustrates a storage device stacking system comprises a main storage device (10) and an auxiliary storage device (20).

Referring to FIG. 1 which illustrates the main storage device (10) comprises a power input interface (11), a power output interface (12), a power management module (13), a data link interface (14), a main data bridging interface (15), a data management module (16) and a main storage module (17), all of which are carried on a first board (18) and electrically connected to one another.

Specifically, the power input interface (11) electrically connected to an external AC (Alternating Current) source is an interface through which the main storage device (10) accesses a power supply; the power output interface (12) is an interface which extends from the power input interface (11) and accesses an external AC (Alternating Current) source; the power management module (13) is used to manage power from an external AC (Alternating Current) source through the power input interface (11) for safe electricity of the data link interface (14), the main data bridging interface (15), the data management module (16), the main storage module (17) and the first board (18) and energy efficiency; the data link interface (14) is an interface linking an external network, wired or wireless, by which the main storage device (10) interacts with outside devices and the outside devices access relevant resources; the main data bridging interface (15) electrically connected to the auxiliary storage device (20) is used in data transmission and management of expanded resources; the data management module (16) is a microprocessor (uP) which executes complicated computer programs; the main storage module (17) is a device in which data digitized through electric, magnetic or optical media technology is stored and also an appliance for data storage based on electric or magnetic energy in general; the first board (18) is a circuit board usually, which may be a single-layered or multi-layered printed circuit board, or a lead frame, a layer of polyimide circuit film, a BT circuit board or a chip-on-board as required.

Referring to FIG. 1 which illustrates the auxiliary storage device (20) comprises a power reception interface (21), an auxiliary data bridging interface (22) and an auxiliary storage module (23), all of which are carried on a second board (24) and electrically connected to one another.

Specifically, the power reception interface (21) electrically connected to an external AC (Alternating Current) source is an interface through which the auxiliary storage device (20) accesses a power supply and the power reception interface (21) accesses external AC transmitted through the power output interface (12) on the main storage device (10); the auxiliary data bridging interface (22) is electrically connected to the main data bridging interface (15) for data transmission from the data management module (16) of the main storage device (10) and management of resources of the expanded auxiliary storage device (20); the auxiliary storage module (23) is a device in which data digitized through electric, magnetic or optical media technology is stored and also an appliance for data storage based on electric or magnetic energy in general; the second board (24) is a circuit board usually, which may be a single-layered or multi-layered printed circuit board, or a lead frame, a layer of polyimide circuit film, a BT circuit board or a chip-on-board as required.

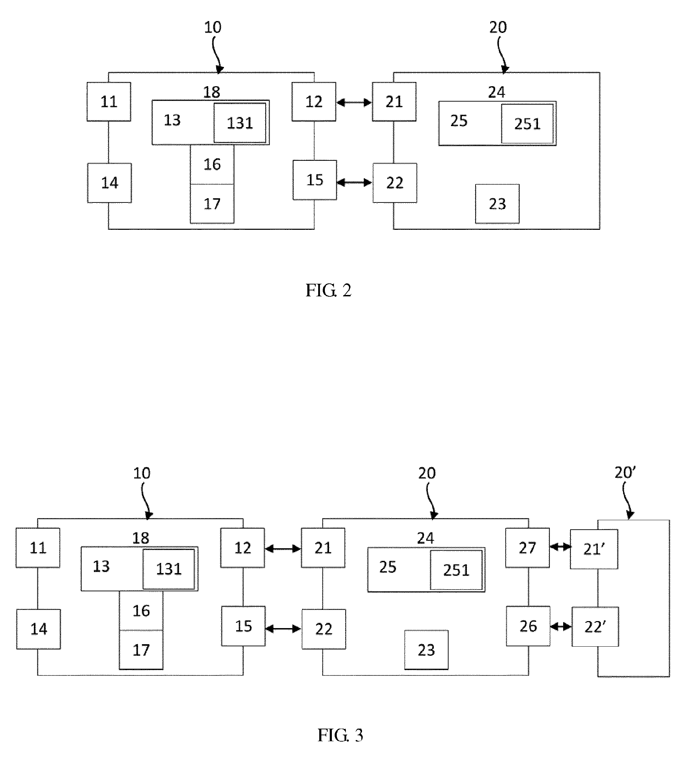

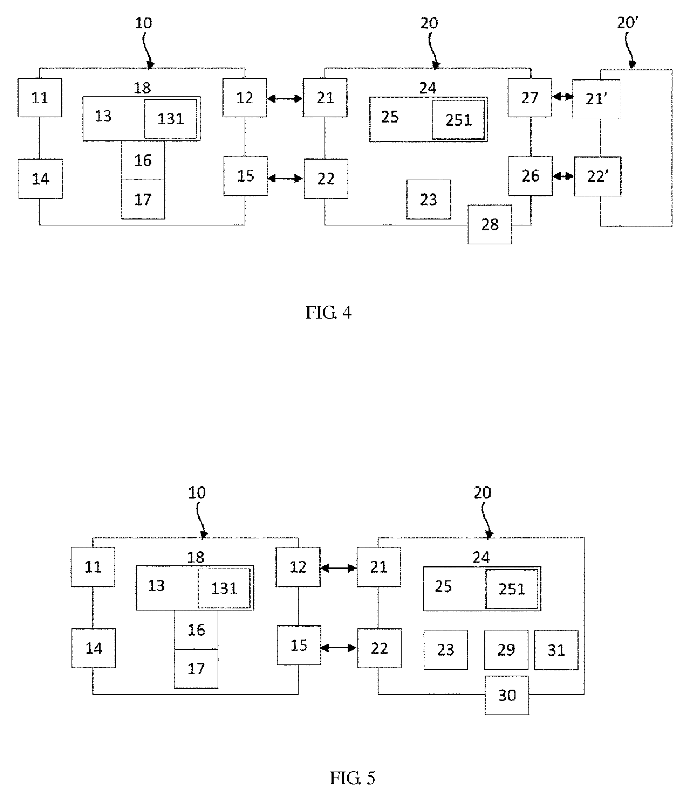

Preferably, as shown in FIG. 2, the power management module (13) comprises a transformer unit (131) and the auxiliary storage device (20) comprises an auxiliary power management module (25) which is carried on and electrically connected to the second board (24) and comprises an auxiliary transformer unit (251): the transformer unit (131) and the auxiliary transformer unit (251) are used to effectively transform Alternating Current (AC) available for interior appliances to Direct Current (DC) which is applicable to ordinary electronic components in practice; alternatively, as shown in FIG. 3, the auxiliary storage device (20) comprises an expanded data link interface (26) and an expanded power output interface (27), both of which are carried on the second board (24) and electrically connected to each other, so that another equipment depends on the expanded data link interface (26) and the expanded power output interface (27) to link the auxiliary storage device (20) which is connected to the main storage device (10) for effective expansibility; as shown in FIG. 4, the auxiliary storage device (20) comprises at least an auxiliary data link interface (28) that is carried on and electrically connected to the second board (24) and taken as an interface linking an external network, wired or wireless, through which both the main storage device (10) and the auxiliary storage device (20) link external devices and the external devices access relevant resources, and the auxiliary data link interface (28) can be combined with or separated from the data link interface (14) in practice; moreover, referring to FIG. 5, the auxiliary storage device (20) comprises a data processing module (29) and an image output module (30), both of which are carried on the second board (24) and electrically connected to each other for more storage spaces and video media functions: the data processing module (29) is a multimedia microprocessor (uP) and the image output module (30) can be a High Definition Multimedia Interface (HDMI), a Digital Visual Interface (DVI) or a Video Graphics Array (VGA) or a combination thereof; as shown in FIG. 5, the auxiliary storage device (20) comprises an auxiliary data management module (31) which assists the data management module (16) in data processing.

The detailed operation process of a storage device stacking system is described in preferred embodiments as follows.

Referring to FIG. 4 that illustrates the power input interface (11) on the main storage device (10) is connected to an external AC source and the transformer unit (131) of the power management module (13) in the main storage device (10) transforms external AC transmitted from the power input interface (11) to DC by which components in the main storage device (10) are electrically activated and the data link interface (14) on the main storage device (10) is electrically connected to an external network; therefore, the main storage device (10), which is connected to an external power supply and a network, allows internal electronic components, the power input interface (11), the power output interface (12), the power management module (13), the data link interface (14), the main data bridging interface (15), the data management module (16), the main storage module (17) and the first board (18), to be activated and function normally.

Then, electricity from an external AC source is transmitted to the power reception interface (21) on the auxiliary storage device (20) through the power output interface (12) on the main storage device (10) and transformed to DC by the auxiliary transformer unit (251) of the auxiliary power management module (25) in the auxiliary storage device (20) so that all components in the auxiliary storage device (20) are electrically activated and the main data bridging interface (15) on the main storage device (10) is electrically connected to the auxiliary data bridging interface (22) on the auxiliary storage device (20); the auxiliary storage device (20) electrically connected to an external power supply allows internal electronic components, the power reception interface (21), the auxiliary data bridging interface (22), the auxiliary storage module (23), the second board (24), the auxiliary power management module (25), the expanded data link interface (26), the expanded power output interface (27) and the auxiliary data link interface (28), to be electrically activated; moreover, both the main storage device (10) and the auxiliary storage device (20) work normally and provide network server services including, without limitation, Redundant Array of Independent Disks (RAID), Common Internet File System (CIFS) and Network File System (NFS).

Finally, the auxiliary data link interface (28) and the data link interface (14) can be connected to identical or different network environment as a collaboration network or a redundant network; the expanded power output interface (27) and the expanded auxiliary data link interface (28) can be available to another auxiliary storage device (20') which comprises an auxiliary storage device (21'), an auxiliary data bridging interface (22') and other relevant components for effective expandability of the main storage device (10).

Alternatively, referring to FIG. 5 which illustrates the auxiliary storage device (20) comprises the data processing module (29), the image output module (30) and the auxiliary data management module (31) for probable expandability of the auxiliary storage device (20) in addition to simple storage functions.

Accordingly, a storage device stacking system in the present disclosure, which differs from traditional server storage devices and is referred to as creative work among applications of storage devices, meets patentability and is applied for the patent.

It should be reiterated that the above descriptions presents preferred embodiments, and any equivalent change in specifications, claims, or drawings still belongs to the technical field within the present disclosure with reference to claims hereinafter.

## Claims

1. A storage device stacking system which is a system with power management and data transmission integrated and comprises: a main storage device (10) and an auxiliary storage device (20) wherein
the main storage device (10) comprises at least a power input interface (11), at least a power output interface (12), a power management module (13), at least a data link interface (14), at least a main data bridging interface (15), a data management module (16) and a main storage module (17), all of which are carried on a first board (18) and electrically connected to one another;
the auxiliary storage device (20) comprises at least a power reception interface (21), at least an auxiliary data bridging interface (22) and an auxiliary storage module (23), all of which are carried on a second board (24) and electrically connected to one another;
features: the power management module (13), the data management module (16) and the main storage module (17) are electrically activated when the power input interface (11) on the main storage device (10) is electrically conducted and the data link interface (14) is connected to an external network; the auxiliary storage device (20) is electrically activated when the power output interface (12) is electrically connected to the power reception interface (21) on the auxiliary storage device (20); an auxiliary storage module (22) and the main storage device (10), both of which are electrically activated, make data transmission through the auxiliary data bridging interface (22) when the main data bridging interface (15) and the auxiliary data bridging interface (22) on the auxiliary storage device (20) are electrically connected to each other.

2. A storage device stacking system according to claim 1 wherein the power management module (13) comprises a transformer unit (131).

3. A storage device stacking system according to claim 1 wherein the auxiliary storage device (20) comprise an auxiliary power management module (25), which is carried on and electrically connected to the second board (24), and the auxiliary power management module (25) comprises an auxiliary transformer unit (251).

4. A storage device stacking system according to claim 1 wherein the auxiliary storage device (20) comprises at least an expanded data link interface (26) and at least an expanded power output interface (27), both of which are carried on the second board (24) and electrically connected to each other.

5. A storage device stacking system according to claim 1 wherein the auxiliary storage device (20) comprise at least an auxiliary data link interface (28) which is carried on and electrically connected to the second board (24).

6. A storage device stacking system according to claim 1 wherein the auxiliary storage device (20) comprises a data processing module (29) and an image output module (30), both of which are carried on the second board (24) and electrically connected to each other.

7. A storage device stacking system according to claim 1 wherein the auxiliary storage device (20) comprises an auxiliary data management module (31).
